# EUROPEAN PATENT APPLICATION

(11) **EP 2 088 378 A2**
(43) Date of publication of application: **12.08.2009**
(21) Application number: 09151054.5
(22) Date of filing: 22.01.2009
(51) Int. Cl.: F24C 15/32

(54) **Oven equipped with steam generation unit**

(30) Priority: 05.02.2008 KR 20080011934
(71) Applicant: Samsung Electronics Co., Ltd., Suwon-si Gyeonggi-do (KR)
(72) Inventor: Shon, Jong Chull, Gyeonggi-do (KR); Hong, Seok Weon, Gyeonggi-do (KR); Kim, Hyang Ki, Gyeonggi-do (KR); Jeon, Ki Suk, Seongnam-si Gyeonggi-do (KR); Kim, Tae Woo, Gyeonggi-do (KR)
(74) Representative: Grünecker, Kinkeldey, Stockmair & Schwanhäusser Anwaltssozietät

(57) **Abstract**

An oven which is convenient to supply water and clean a steam generation unit thereof. The oven includes a cooking chamber in which food is cooked, a door which opens and closes the cooking chamber, and a steam generation unit formed at a front part of a bottom plate of the cooking chamber.

## Description

### BACKGROUND

### 1. Field

The present invention relates to an oven, and more particularly to an oven equipped with a steam generation unit.

### 2. Description of the Related Art

An oven refers to an appliance for cooking food by hermetically heating the food therein. In general, ovens can be classified into an electric oven, a gas oven and an electronic oven according to the type of heating system used therein. The electric oven adopts an electric heater whereas the gas oven and the electronic oven utilize a heat generated from gas and a frictional heat generated from water molecules by high frequency, respectively.

Since the oven heats a food containing moisture in a hermetic cooking chamber, an inside of the cooking chamber may be stained with the food scattering about while being cooked. The food stain usually contains greasy substances and therefore is hard to remove. Accordingly, these days, the oven is designed to generate steam in the cooking chamber for use not only in cooking but also in cleaning of the cooking chamber.

As an example of the oven generating steam, a "High frequency heating device with steam generating function" is disclosed in JP Patent Laid-open No. 2006-275505. A steam generation part of the disclosed heating device includes an evaporating pan disposed at a rear side of a cooking chamber to facilitate diffusion of steam by a circulating fan.

However, the conventional steam generation part is inconvenient in supplying water and cleaning thereof because it is usually disposed in the center or at the rear side of the cooking chamber. Although JP Patent Laid-open No. 2006-275505 suggests the steam generation part including a dedicated water supplying unit and a separable evaporating pan to solve the above problem, the dedicated water supplying unit and the evaporating pan complicate the whole structure of the heating device. Also, dirt may leak through a gap between the evaporating pan and an inner surface of the cooking chamber.

Furthermore, in the conventional steam generation part, it is difficult to check the internal state. Therefore, a user may miss the time for replenishment of water or use the steam generation part when it has been contaminated for a long time without recognizing the contaminated state. Especially, during cooking of food, the steam generation part is not seen as being covered with food or a food container, thereby becoming more difficult to check.

### SUMMARY

The present invention has been made in order to solve the above problems. It is an aspect of the invention to provide an oven improved in the structure of a steam generation unit such that supplying of water and cleaning of the steam generation unit can be facilitated.

Consistent with one aspect, an exemplary embodiment of the present invention provides an oven including a cooking chamber opened to a front side thereof, a door opening and closing the cooking chamber, and a steam generation unit formed at a front part of a bottom plate of the cooking chamber.

Here, the steam generation unit may include a water tub holding water therein, and a cover part covering an opening part of the water tub and including a plurality of steam outlets.

The steam outlets may be configured such that steam can be exhausted by a predetermined angle from a surface of the cover part.

The steam outlets may be configured so that steam can be exhausted from a front part toward a rear part of the cooking chamber.

The steam outlets may be configured so that steam can be exhausted in several directions.

Sectional surface areas of the steam outlets may be increased from the front part toward the rear part of the cooking chamber.

The number of the steam outlets may increase toward the rear part of the cooking chamber.

The oven may be configured so that the opening part of the water tub has a sectional surface area increasing toward the rear part of the cooking chamber and the cover part has a shape corresponding to the opening part.

The water tub may be integrally formed with the bottom plate of the cooking chamber.

The oven may further include a dirt entry prevention ridge projected along an outer periphery of the water tub.

The steam generation unit may be heated independently by a dedicated steam generating heater.

The oven may further include a thermal cutoff which cuts off a power source of the steam generating heater at greater than a predetermined temperature.

Additional aspects and/or advantages of the invention will be set forth in part in the description which follows and, in part, will be apparent from the description, or may be learned by practice of the invention.

### BRIEF DESCRIPTION OF THE DRAWINGS

These and/or other aspects and advantages of the exemplary embodiments of the invention will become apparent and more readily appreciated from the following description of the embodiments, taken in conjunction with the accompanying drawings, of which:
FIG. 1 is a perspective view of an oven according to the present invention;
FIG. 2 is a longitudinal sectional view of the oven according to the present invention;
FIG. 3A and FIG. 3B are sectional views of a cover part of the oven;
FIG. 4 is a perspective view of a steam generation unit of the oven according to a first embodiment of the present invention;
FIG. 5 is a perspective view of a steam generation unit of the oven according to a second embodiment of the present invention;
FIG. 6 is a perspective view of a steam generation unit of the oven according to a third embodiment of the present invention;
FIG. 7 is a perspective view of a steam generation unit of the oven according to a fourth embodiment of the present invention; and
FIG. 8 is a perspective view of a steam generation unit of the oven according to a fifth embodiment of the present invention.

### DETAILED DESCRIPTION OF EMBODIMENTS

Reference will now be made in detail to exemplary embodiments of the present invention, examples of which are illustrated in the accompanying drawings, wherein like reference numerals refer to like elements throughout. The embodiments are described below to explain the present invention by referring to the figures. Although the embodiments of the present invention are explained about a steam generation unit applied to an electric oven, this is merely an explanatory example. Therefore, the steam generation unit may be applied to various cooking devices including a gas oven and a microwave oven.

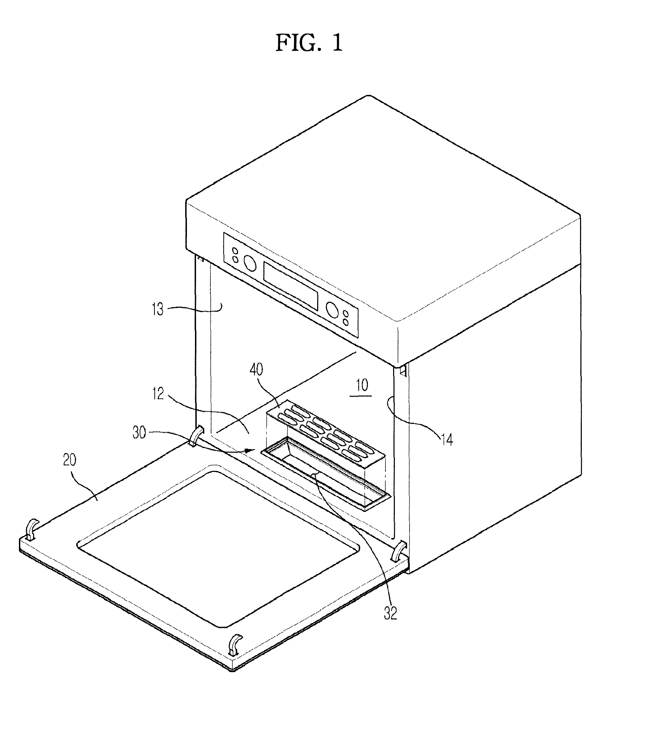

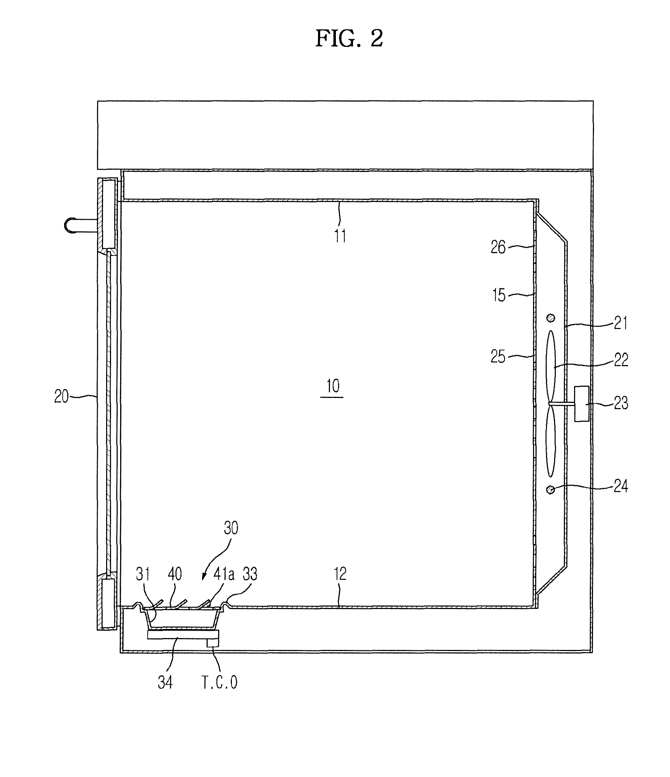

FIG. 1 and FIG. 2 are a perspective view and a side sectional view of an oven according to the present invention, respectively.

As shown in the drawings, the oven according to the present invention includes a cooking chamber 10 holding a space defined by an upper plate 11, a bottom plate 12, both side plates 13 and 14, and a rear plate 15, and an oven door 20 which opens and closes an opened front side of the cooking chamber 10.

A fan cover 21 is connected at an outside of the rear plate 15 to mount therein a convection fan 22 circulating air in the cooking chamber 10. An electric heater 24 is mounted around an outer periphery of the convection fan 22. In addition, a fan motor 23 is mounted behind the fan cover 21 to operate the convection fan 22.

In the center of the rear plate 15 facing the convection fan 22, a plurality of suction holes 25 are formed to draw in the air from the cooking chamber 10. Additionally, a plurality of exhaust holes 26 are formed along the periphery of the rear plate 15 to supply heat into the cooking chamber 10 therethrough.

The oven further includes a steam generation unit 30 formed at a front part of the bottom plate 12 of the cooking chamber 10 such that a user can supply water through the steam generation unit 30 without requiring a dedicated water supply device. Also, an internal state of the steam generation unit 30 can be checked at almost all times, that is, even during cooking. As a result, hygiene and safety management of the steam generation unit 30 can be performed more conveniently.

The steam generation unit 30 is independently heated by a steam generating heater 34, thereby achieving a high thermal efficiency. During cleaning of the cooking chamber 10, the other parts in the cooking chamber 10 except the steam generation unit 30 can be maintained at a relatively lower temperature than the steam generation unit 30 by interrupting the operation of the other heating units except the steam generating heater 34. By this, condensed water is more actively generated and accordingly, dirt sticking to an inner wall of the cooking chamber 10 can be removed more easily. During the cooking, a cooking space near the door 20, where the temperature is relatively lower, is additionally heated by the steam generating heater 34 such that the temperature of the whole cooking chamber 10 can be uniformly maintained.

In order to prevent the steam generation unit 30 from being damaged by the steam generating heater 34, a thermal cutoff (TCO) is further provided to the oven. The TCO cuts off a power source of the steam generating heater 34 at greater than a predetermined temperature.

As shown in FIG. 1 and FIG. 2, the steam generation unit 30 includes a water tub 31 holding water therein, and a cover part 40 covering an opening part 32 of the water tub 31 and including a plurality of steam outlets 41a.

According to the oven of the present invention, since the water tub 31 is formed integrally with the bottom plate 12 of the cooking chamber 10, the number of manufacturing processes can be saved. Furthermore, the oven can be kept hygienic because there is not a gap which dirt may be caught in or leaked through.

In addition, a dirt entry prevention ridge 33 is formed along the periphery of the water tub 31. Therefore, dirt such as waste food or grease is prevented from infiltrating the water tub 31 and scattering further into the cooking chamber 10.

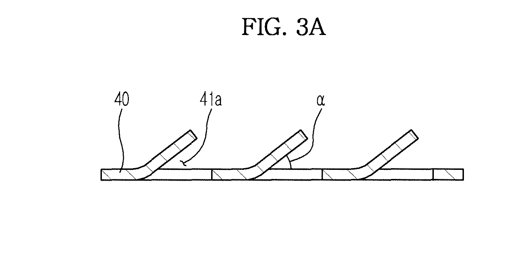

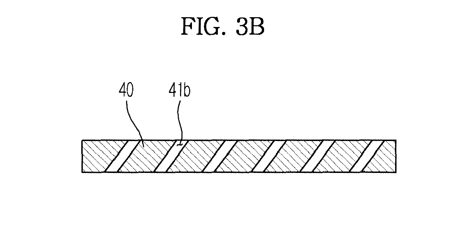

FIG. 3A and FIG. 3B are sectional views showing the cover part of the oven according to the present invention.

As shown in the drawings, the steam outlets 41a and 41b are configured so that steam can be exhausted by a predetermined angle α from a surface of the cover part 40. Here, the steam outlets 41 a and 41 b may be formed all at the same angle or respectively different angles. For example, the angles may be increased or decreased from the front part to the rear part of the cooking chamber.

The steam outlet 41a shown in FIG. 3a is formed by a lancing process of the cover part 40. On the other hand, the steam outlet 41 b shown in FIG. 3b is formed by perforating the cover part 40 having a predetermined thickness by a predetermined angle. The steam outlets may be formed by other various methods and forms.

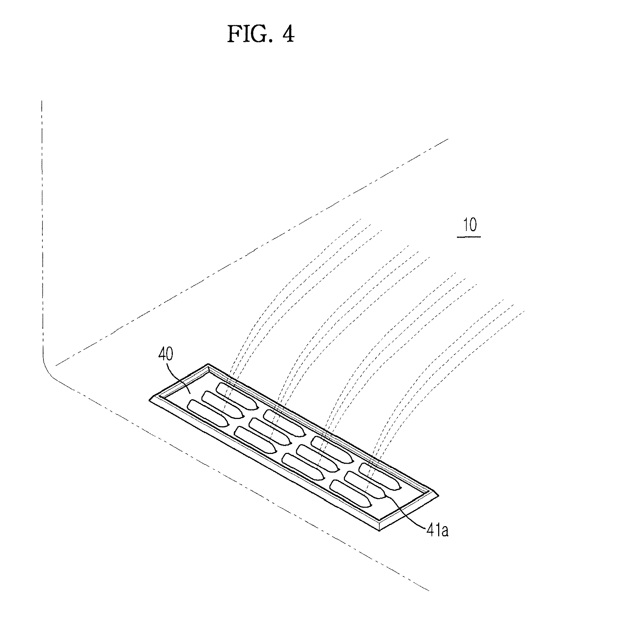

FIG. 4 through FIG. 8 are perspective views each showing a steam generation unit according to diverse embodiments of the present invention.

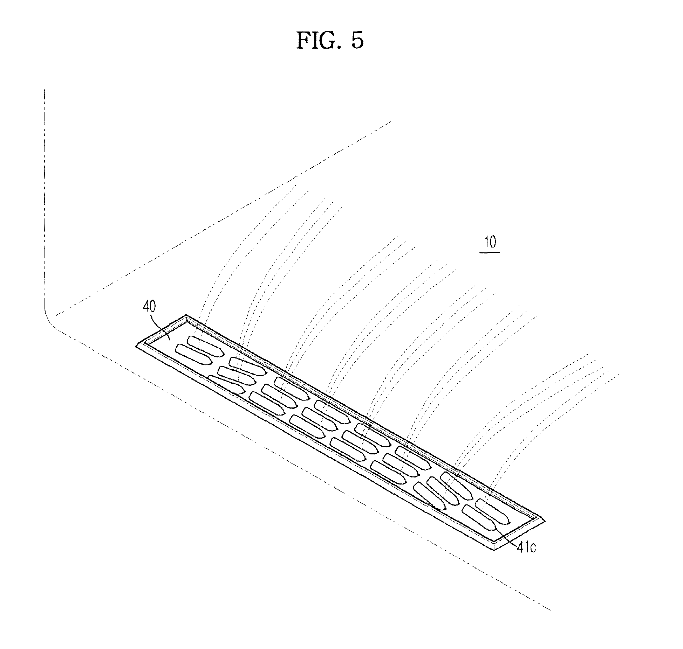

The steam outlets 41 a of FIG. 4 are configured so that steam can be exhausted from the front part of the bottom plate 12 of the cooking chamber 10 toward the rear part of the cooking chamber 10. Steam outlets 41 c shown in FIG. 5 are configured so that steam can be exhausted in several directions to the cooking chamber 10. According to those configurations, three-dimensional steam exhaustion toward every part of the cooking chamber 10 can be achieved.

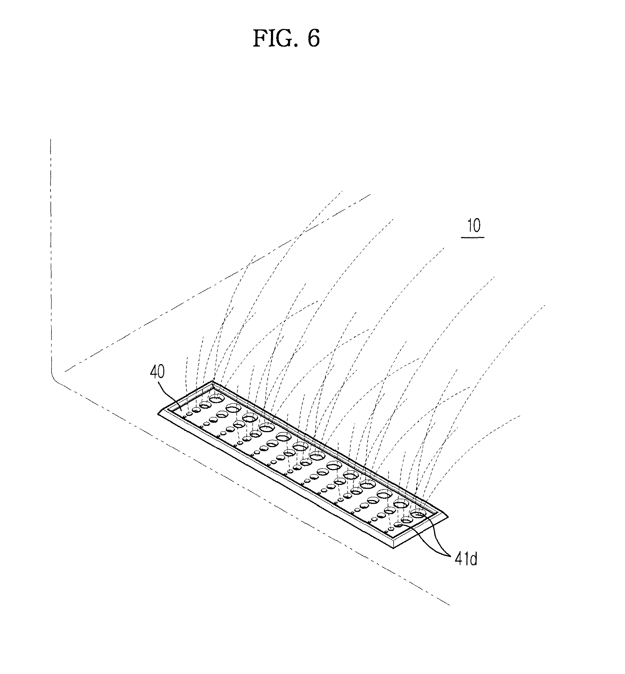

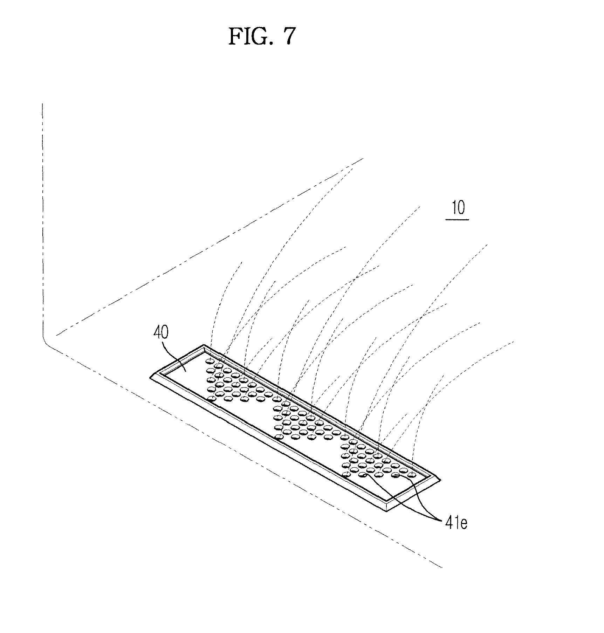

Steam outlets 41 d shown in FIG. 6 are configured to have sectional surface areas increasing from the front part to the rear part of the cooking chamber 10. In FIG. 7, steam outlets 41e are arranged to increase in number from the front part to the rear part of the cooking chamber 10. Accordingly, quantity of the exhausted steam is increased toward the rear part of the cooking chamber 10. As a consequence, diffusion of the steam throughout the cooking chamber 10 can be performed efficiently.

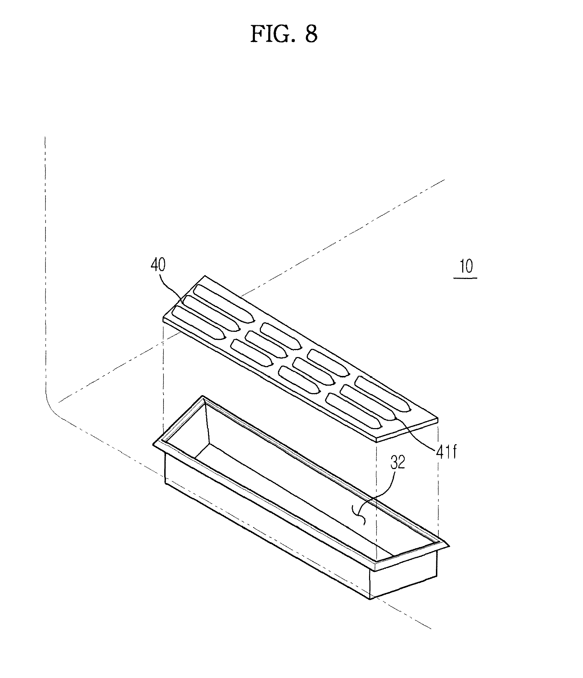

FIG. 8 is a perspective view showing the steam generation unit according to a fifth embodiment of the present invention. In this embodiment, a sectional surface area of the opening part 32 of the water tub 31 increases toward the rear part of the cooking chamber 10. Therefore, the quantity of exhausted steam increases toward the rear part of the cooking chamber 10. The cover part 40 is shaped corresponding to the opening part 32 of the water tub 31. Also, the user can be prevented from covering the opening part 32 with the cover part 40 in the opposite direction by mistake.

Hereinafter, a method for cleaning the cooking chamber 10 using the steam generation unit 30 will be explained.

A proper quantity of water is supplied to the water tub 31 of the steam generation unit 30 through the opening part 32 formed at the front part. After the door 20 is closed, the steam generating heater 34 is operated to generate steam from the water tub 31. The generated steam is exhausted through the steam outlets 41a of the cover part 40 by a predetermined angle and in a predetermined direction, and then condensed on the inner wall of the cooking chamber 10. Afterward, the dirt sticking to the inner wall of the cooking chamber 10 may run down the inner wall together with the condensed water formed from the steam, or become easy removable after being soaked by the condensed water.

Here, diffusion of the steam can be promoted using the convection fan 22. Furthermore, by stopping the operation of the other heating units but the steam generating heater 34, temperature at the walls of the cooking chamber 10 except the steam generation unit 30 can be kept relatively lower than the other parts such that condensation of the steam is more efficiently achieved. Whereas the conventional structure has the water tub and the heater mounted in the center of the bottom of the cooking chamber, the water tub 31 and the steam generating heater 34 of the oven according to the present invention are disposed at the front part of the cooking chamber 10. Therefore, although the steam generating heart 34 is in operation, temperature at the side plates 13 and 14 and the rear plate 15 can be lowered relative to the front part, thereby promoting condensation of the steam and accordingly facilitating cleaning of the cooking chamber 10.

Moreover, although the dirt flows down the inner wall of the cooking chamber 10, the dirt can be prevented from entering the steam generation unit 30 by the dirt entry prevention ridge 33 formed around the steam generation unit 30.

Furthermore, while food is being cooked, the food can be replenished with water. If the steam generating heater 34 is operated together with a cooking heater, since heat is generated near the door 20 where the temperature is relatively low, the temperature can be uniformly distributed through the whole cooking chamber 10.

As apparent from the above description, the present invention provides an oven having a steam generation part formed at a front bottom of a cooking chamber. Therefore, water supply to the steam generation part and cleaning of the steam generation part can be conveniently performed.

In addition, with the oven according to the embodiment of the present invention, an internal state of the steam generation part can be checked. Therefore, hygiene and safety management of the steam generation part can be facilitated. Also, uniform temperature distribution can be achieved in the cooking chamber.

Although embodiments of the present invention have been shown and described, it would be appreciated by those skilled in the art that changes may be made in this embodiment without departing from the principles and spirit of the invention, the scope of which is defined in the claims and their equivalents.

## Claims

1. An oven comprising:
a cooking chamber opened to a front side thereof;
a door opening and closing the cooking chamber; and
a steam generation unit formed at a front part of a bottom plate of the cooking chamber.

2. The oven according to claim 1, wherein the steam generation unit comprises:
a water tub holding water therein; and
a cover part covering an opening part of the water tub and including a plurality of steam outlets.

3. The oven according to claim 2, wherein the steam outlets are configured such that steam can be exhausted by a predetermined angle from a surface of the cover part.

4. The oven according to claim 3, wherein the steam outlets are configured so that steam can be exhausted from a front part toward a rear part of the cooking chamber.

5. The oven according to claim 3, wherein the steam outlets are configured so that steam can be exhausted in several directions.

6. The oven according to claim 3, wherein the angle increases from the front part toward the rear part of the cooking chamber.

7. The oven according to claim 2, wherein sectional surface areas of the steam outlets increase from the front part toward the rear part of the cooking chamber.

8. The oven according to claim 2, wherein the number of the steam outlets increases toward the rear part of the cooking chamber.

9. The oven according to claim 2, wherein the opening part of the water tub is formed to have a sectional surface area increasing toward the rear part of the cooking chamber, and the cover part has a shape corresponding to the opening part.

10. The oven according to claim 2, wherein the water tub is integrally formed with the bottom plate of the cooking chamber.

11. The oven according to claim 2, further comprising a dirt entry prevention ridge projected along an outer periphery of the water tub.

12. The oven according to claim 1, wherein the steam generation unit is heated independently by a dedicated steam generating heater.

13. A steam generation unit comprising:
a water tub holding water therein; and
a cover part covering an opening part of the water tub and including a plurality of steam outlets.

14. The steam generation unit according to claim 13, wherein the steam outlets are configured to exhaust steam by a predetermined angle from a surface of the cover part.

15. The steam generation unit according to claim 14, wherein the steam outlets are configured so that steam can be exhausted in several directions.
